# EUROPEAN PATENT APPLICATION

(11) **EP 1 464 537 A1**
(43) Date of publication of application: **06.10.2004**
(21) Application number: 03252162.7
(22) Date of filing: 04.04.2003
(51) Int. Cl.: B60P 7/08, B60P 7/06

(54) **Rope-tightening device**

(71) Applicant: Ma, Pony, Wen-Shang Dist., Taipei City (TW)
(72) Inventor: Ma, Pony, Wen-Shang Dist., Taipei City (TW)
(74) Representative: Jenkins, Peter David

(57) **Abstract**

A rope-tightening device (500) includes a first pawl member (56) mounted on a base (51) , a second pawl member (55) mounted on a lever (52), and a pivot axle (57) that permits pivoting of the lever (52) in one of a first direction toward the base (51), and a second direction away from the base (51). The pivot axle (57) is connected to one end (631) of a rope (63). A ratchet wheel (54) is mounted on and is co-rotatable with the pivot axle (57). The first and second pawl members (56, 55) interact with the ratchet wheel (54) such that the pivot axle (57) rotates with the lever (52) for tightening the rope (63) when the lever (52) moves in the first direction, and such that rotation of the pivot axle (57) with the lever (52) is arrested when the lever (52) moves in the second direction.

## Description

The invention relates to a rope-tightening device, more particularly to a rope-tightening device that can be operated with a minimum amount of effort and with relative ease.

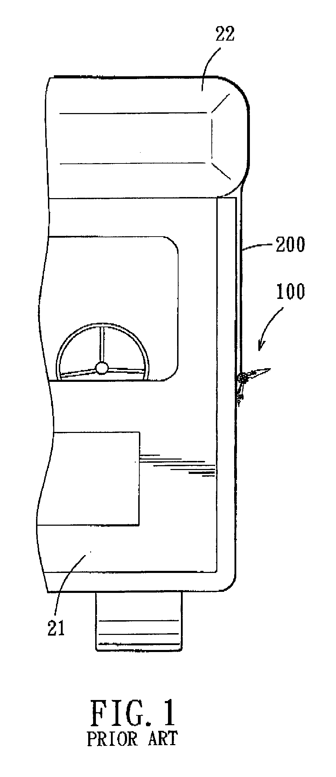

Referring to Figure 1, a conventional rope-tightening device 100 is mounted on one side of a truck 21 for tightening a rope 200 that binds an object 22 on a loading deck of the truck 21.

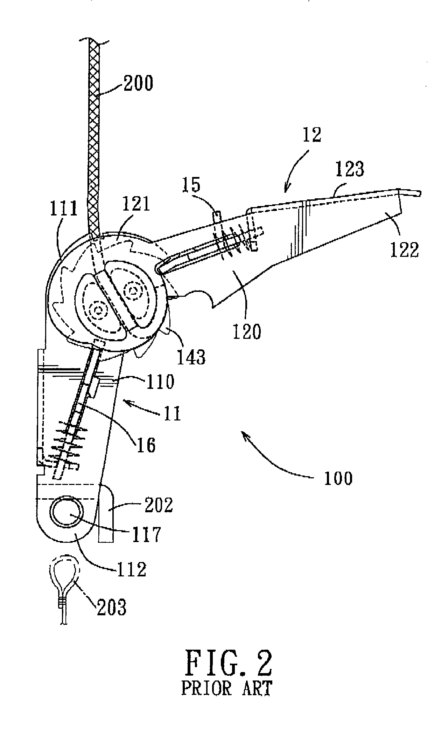

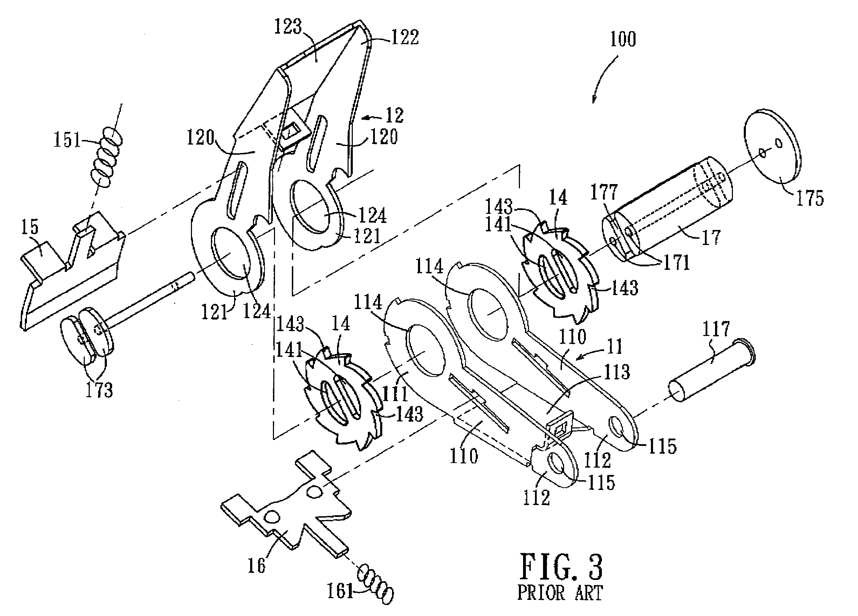

Referring to Figures 2 and 3, the conventional rope-tightening device 100 includes an elongate base 11, a first pawl member 16, an elongate lever 12, a second pawl member 15, a pivot axle 17, and a pair of ratchet wheels 14.

The base 11 includes a base plate 113 and a pair of lateral plates 110, each of which extends transversely from a respective lateral edge of the base plate 113, and each of which has a first pivot portion 111 formed with a first pivot hole 114, and a mounting portion 112 opposite to the first pivot portion 111 and formed with a rod hole 115. A rod 117 has opposite ends mounted in the rod holes 115 in the lateral plates 110.

The first pawl member 16 is mounted on the base 11, and is slidable between the first pivot portions 111 and the mounting portions 112 of the lateral plates 110. The first pawl member 16 is biased by a spring 161 toward the first pivot portions 111.

The lever 12 includes a base wall 123 and a pair of lateral walls 120, each of which extends transversely from a respective lateral edge of the base wall 123, and each of which has a second pivot portion 121 formed with a second pivot hole 124, and an operating portion 122 opposite to the second pivot portion 121. The operating portions 122 and the base wall 123 cooperate to form a handle of the lever 12.

The second pawl member 15 is mounted on the lever 12, and is slidable between the second pivot portions 121 and the operating portions 122 of the lateral walls 120. The second pawl member 15 is biased by a spring 151 toward the second pivot portions 121.

The second pivot portions 121 flank the first pivot portions 111. The pivot axle 17 has opposite ends, each of which extends through an adjacent pair of the first and second pivot holes 114, 124 to connect pivotally the lever 12 to the base 11. Each of the ends of the pivot axle 17 is formed with a pair of generally semicircular protrusions. The pivot axle 17 is further formed with a pair of rivet holes 171 that extend axially through the protrusions.

Each of the ratchet wheels 14 is disposed between one of the lateral plates 110 and one of the lateral walls 120, and is formed with a pair of generally semicircular axle holes 141 to engage the protrusions on a respective end of the pivot axle 17. Two rivets 173 extend through the rivet holes 171 and engage a washer 175 so as to secure the ratchet wheels 14 on the opposite ends of the pivot axle 17.

The lever 12 can be pivoted in one of a first direction toward the base 11, and a second direction away from the base 11.

In use, the base 11 may be fixed on a surface, a hook 202 may be used to engage the rod 117, or another rope 203 may be fastened to the rod 117. One end of the rope 200 that is to be tightened is secured to the pivot axle 17 in a notch 177 of the latter, The lever 12 is then operated to reciprocate between the first and second directions. When the lever 12 is lifted to pivot in the second direction (i.e., away from the base 11), the second pawl member 15 engages a respective tooth 143 of each of the ratchet wheels 14, whereas the first pawl member 16 disengages from the ratchet wheels 14. Therefore, the ratchet wheels 14 and the pivot axle 17 rotate with the lever 12 to tighten the rope 200 at this time. On the other hand, when the lever 12 is pressed to pivot in the first direction (i.e., toward the base 11), the first pawl member 15 engages a respective tooth 143 of each of the ratchet wheels 14, whereas the second pawl member 15 disengages from the ratchet wheels 14, Therefore, rotation of the ratchet wheels 14 and the pivot axle 17 can be arrested by the first pawl member 16 so that winding or unwinding of the rope 200 does not occur at this time. As such, reciprocating movement of the lever 20 can wind the rope 200 on the pivot axle 17. If the other end of the rope 200 is fixed, the rope 200 will be tightened gradually to ensure effective binding of an object.

In the aforesaid conventional rope-tightening device 100, tightening of the rope 200 is accomplished by applying a lifting force for pivoting the lever 12 in the second direction. In general, a pressing action is easier to conduct than a lifting action. As such, because much effort has to be exerted to lift the lever 12, and because little effort is needed to press the lever 12, the design of the lever 12 is not ergonomic, and repeated operation of the lever 12 can cause discomfort and can result in possible injury.

Therefore, the object of the present invention is to provide a rope-tightening device that has an ergonomic design and that can be operated with a minimum amount of effort and with relative ease.

Accordingly, the rope-tightening device of the present invention includes an elongate base, a first pawl member, an elongate lever, a second pawl member, a pivot axle, a ratchet wheel, and a rope-guiding rod.

The elongate base has a first pivot portion formed with a first pivot hole, and a mounting portion opposite to the first pivot portion. The fixst pawl member is mounted on the base. The elongate lever has a second pivot portion formed with a second pivot hole, and an operating portion opposite to the second pivot portion. The second pawl member is mounted on the lever. The pivot axle extends through the first and second pivot holes to connect pivotally the lever to the base such that the lever can be pivoted in one of a first direction toward the base, and a second direction away from the base. The pivot axle is adapted to be connected to one end of a rope that is to be tightened. The ratchet wheel is mounted on and is co-rotatable with the pivot axle. The rope-guiding rod is mounted on the base, is disposed parallel and adjacent to the pivot axle, and is adapted to guide the rope that is connected to the pivot axle.

When the levermoves in the first direction, the first pawl member disengages from the ratchet wheel, and the second pawl member engages the ratchet wheel such that the pivot axle rotates with the lever for tightening the rope that is connected to the pivot axle.

On the other hand, when the lever moves in the second direction, the first pawl member engages the ratchet wheel, and the second pawl member disengages from the ratchet wheel so as to arrest rotation of the pivot axle with the lever.

Other features and advantages of the present invention will become apparent in the following detailed description of the preferred embodiments with reference to the accompanying drawings, of which:
Figure 1 is a fragmentary schematic view showing a conventional rope-tightening device used for tightening a rope that binds an object on a truck;
Figure 2 is an assembled schematic view of the conventional rope-tightening device;
Figure 3 is an exploded perspective view of the conventional rope-tightening device;
Figure 4 is an exploded perspective view of the first preferred embodiment of a rope-tightening device according to the present invention;
Figure 5 is an assembled schematic view of the first preferred embodiment, illustrating a lever when disposed at an initial position;
Figure 6 is an assembled schematic view of the first preferred embodiment, illustrating the lever when pivoted toward a base;
Figure 7 is an assembled schematic view of the first preferred embodiment, illustrating the lever when disposed proximate to the base;
Figure 8 is an assembled schematic view of the first preferred embodiment, illustrating the lever when fastened to the base;
Figure 9 is a view similar to Figure 5, illustrating how a pawl member on the lever can be operated to disengage the ratchet wheels;
Figure 10 is an assembled schematic view of the first preferred embodiment, illustrating how loosening of a rope is achieved; and
Figure 11 is a schematic side view of the second preferred embodiment of a rope-tightening device according to the present invention.

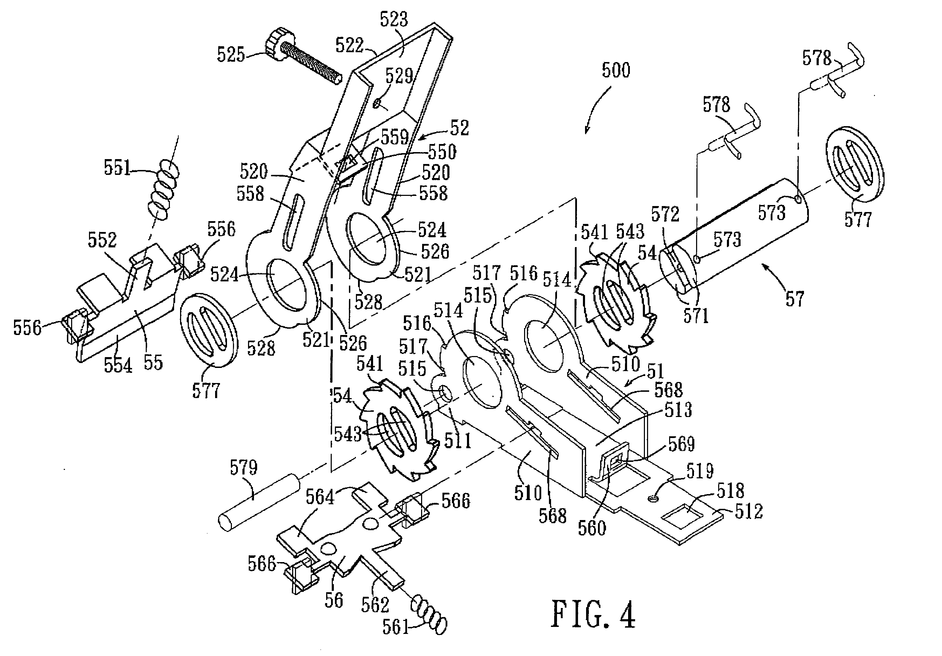

Referring to Figure 4, the first preferred embodiment of a rope-tightening device 500 according to the present invention is shown to include an elongate base 51, a first pawl member 56, an elongate lever 52, a second pawl member 55, a pivot axle 57, a pair of ratchet wheels 54, and a rope-guiding rod 579.

The elongate base 51 has a first pivot portion 511 and a mounting portion 512 opposite to the first pivot portion 511. The base 51 includes a base plate 513 and a pair of lateral plates 510, each of which extends transversely from a respective lateral edge of the base plate 513. Each of the lateral plates 510 is formed with a first pivot hole 514 in the first pivot portion 511, and a rod hole 515 disposed on one side of the first pivot hole 514 opposite to the mounting portion 512 and disposed closer to the base plate 513 than the first pivot hole 514. The rope-guiding rod 579 is mounted in the rod holes 515 in the lateral plates 510, thereby mounting the rope-guiding rod 579 on the base 51. The base plate 513 is formed with a mounting hole 518 and a threaded hole 519 at the mounting portion 512 of the base 51. In addition, each of the lateral plates 510 has a curved periphery at the first pivot portion 511 of the base 51. The curved periphery is formed with a radial flange 516, which cooperates with the periphery adjacent to the rod hole 515 so as to form an engaging groove 517. Each of the lateral plates 510 is further formed with an elongate slot 568 therethrough. The base plate 513 is further formed with a pawl anchoring lug 560 that extends transversely therefrom. The pawl anchoring lug 560 is formed with an anchoring hole 569.

The first pawl member 56 is mounted on the base 51 and is slidable between the first pivot portion 511 and the mounting portion 512. The first pawl member 56 includes a pair of pawl pieces 564 extending through the elongate slots 568 in the lateral plates 510, an anchoring rod 562 extending through the anchoring hole 569, a spring 561 sleeved on the anchoring rod 562 and having one end abutting against the pawl anchoring lug 560, and a pair of operating plates 566 extending through the elongate slots 568 in the lateral plates 510. Each of the operating plates 566 is bent to prevent removal of the first pawl member 56 from the base 51. The spring 561 provides a biasing force for biasing the first pawl member 56 toward the first pivot portion 511.

The elongate lever 52 has a second pivot portion 521 formed with a second pivot hole 524, and an operating portion 522 opposite to the second pivot portion 521. The lever 52 includes a base wall 523 and a pair of lateral walls 520, each of which extends transversely from a respective lateral edge of the base wall 523 and is formed with the second pivot hole 524. The base wall 523 is further formed with a fastener hole 529 at the operating portion 522 of the lever 52. Each of the lateral walls 520 has a curved periphery at the second pivot portion 521 of the lever 52. The curved periphery includes a smaller-curvature section 526 and a larger-curvature section 528. Each of the lateral walls 520 is further formed with an elongate slot 558 therethrough. The base wall 523 is further formed with a pawl anchoring lug 550 that extends transversely therefrom. The pawl anchoring lug 550 is formed with an anchoring hole 559.

The second pawl member 55 is mounted on the lever 52 and is slidable between the second pivot portion 521 and the operating portion 522. The second pawl member 55 includes a pawl piece 554 disposed between the lateral walls 520, an anchoring rod 552 extending through the anchoring hole 559, a spring 551 sleeved on the anchoring rod 552 and having one end abutting against the pawl anchoring lug 550, and a pair of operating plates 556 extending through the elongate slots 558 in the lateral walls 520. The operating plates 556 are bent to prevent removal of the second pawl member 55 from the lever 52. The spring 551 provides a biasing force for biasing the second pawl member 55 toward the second pivot portion 521.

The lateral walls 520 flank the lateral plates 510. The pivot axle 57 has opposite ends, each of which extends through an adjacent pair of the first and second pivot holes 514, 524 to connect pivotally the lever 52 to the base 51. Each of the ends of the pivot axle 57 is formed with a pair of generally semicircular protrusions 571. The pivot axle 57 is further formed with a pair of retainer holes 573 that extend radially through the protrusions 571. At this time, the rope-guiding rod 579 is disposed parallel and adjacent to the pivot axle 57.

Each of the ratchet wheels 54 is disposed between one of the lateral plates 510 and one of the lateral walls 520, and is formed with a pair of generally semicircular axle holes 541 to engage the protrusions 571 on a respective end of the pivot axle 57. Two washers 577 are sleeved on the opposite ends of the pivot axle 57, respectively. Two locking pins 578 are extended respectively through the retainer holes 573, and have opposite ends that are bent to retain the washers 577 and the ratchet wheels 54 on the opposite ends of the pivot axle 57.

The lever 52 can be pivoted in one of a first direction toward the base 51, and a second direction away from the base 51.

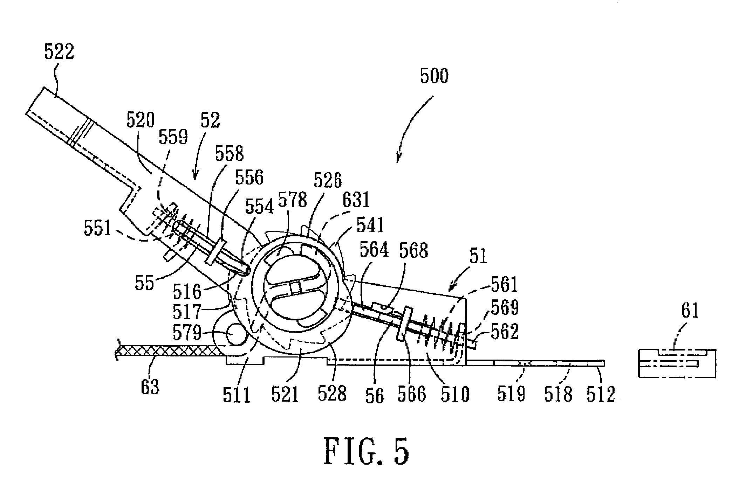

Referring further to Figure 5, in use, the mounting portion 512 of the base 51 may be connected to an engaging device 61 that engages the mounting hole 518. Since the particular construction of the engaging device 61 is irrelevant to the claimed invention, a detailed description of the same is omitted herein for the sake of brevity. Thereafter, one end 631 of a rope 60 that binds an object (not shown) is passed under the rope-guiding rod 579 before being secured to the pivot axle 57 in a notch 572 (see Figure 4) of the latter.

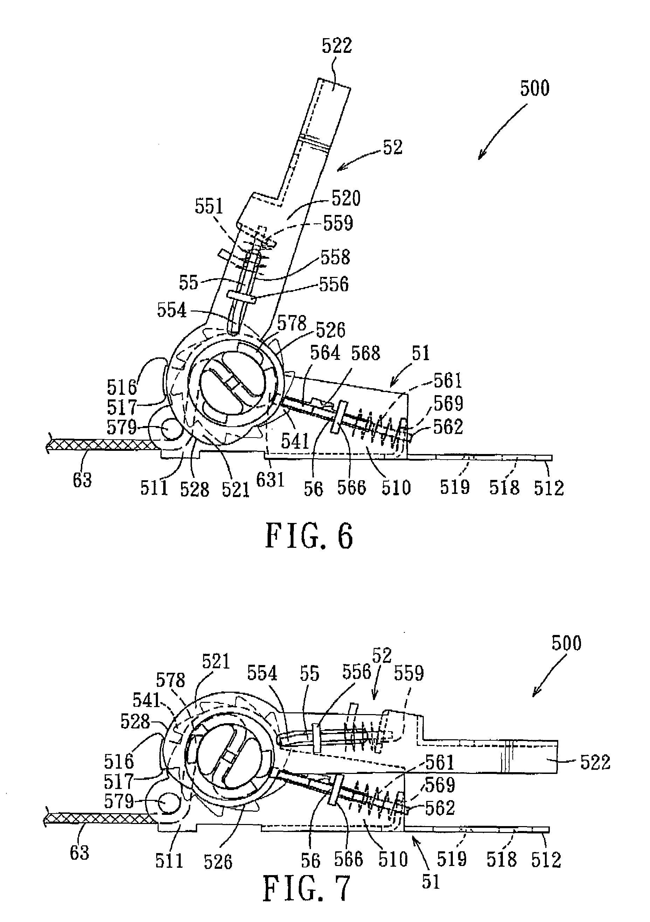

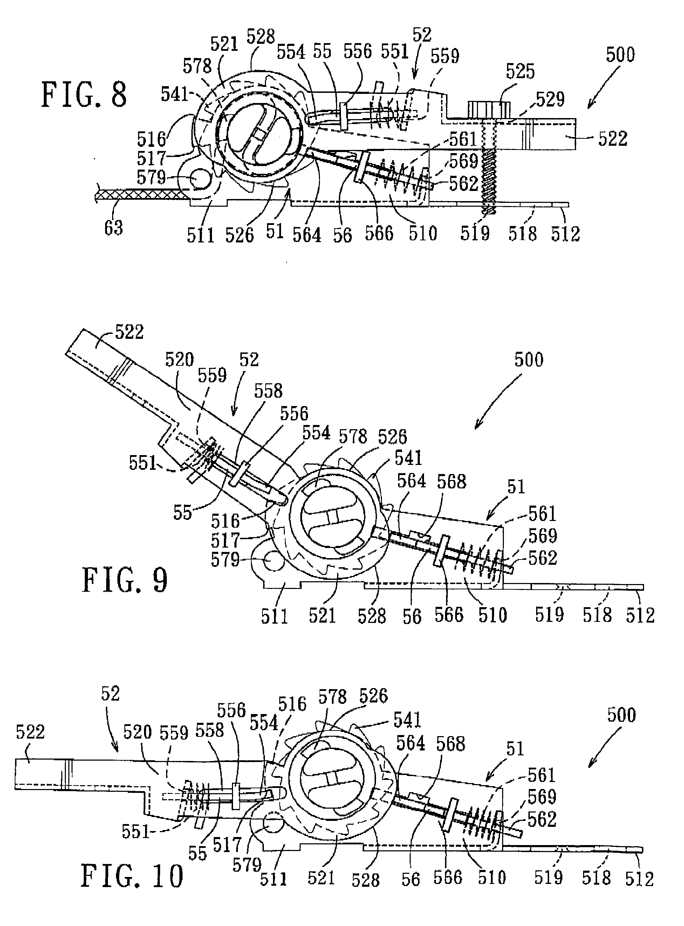

The lever 52 is first disposed in an initial position, where the pawl piece 554 abuts against the radial flanges 516 on the lateral plates 510. From the initial position shown in Figure 5, the lever 52 can be pressed to pivot in the first direction toward the base 51, as best shown in Figures 6 and 7. When the lever 52 moves in the first direction, the secondpawl member 55 engages a respective tooth 541 of each of the ratchet wheels 54, whereas the first pawl member 56 disengages from the ratchet wheels 54. Therefore, the ratchet wheels 54 and the pivot axle 57 rotate with the lever 52 to tighten the rope 63. By virtue of the rope-guiding action of the rope-guiding rod 579, smooth pivoting movement of the lever 52 in the first direction can be ensured.

To further tighten the rope 63, the lever 52 is moved in the second direction back to the initial position, and is once again moved in the first direction toward the base 51. When the lever 52 is lifted away from the base 51 to pivot in the second direction, the first pawl member 56 engages a respective tooth 541 of each of the ratchet wheels 54, whereas the second pawl member 55 disengages from the ratchet wheels 54. Therefore, rotation of the ratchet wheels 54 and the pivot axle 57 can be arrested by the first pawl member 56 so that winding or unwinding of the rope 63 does not occur at this time.

It has thus been shown that reciprocating movement of the lever 52 can wind the rope 63 on the pivot axle 57. If the other end of the rope 63 is fixed, the rope 63 will be tightened gradually to ensure effective binding of an object.

Moreover, when a desired tension of the rope 63 is achieved, a fastener 525 may be extended through the fastener hole 529 in the lever 52 so as to threadedly engage the threaded hole 519 in the base 51 in order to fasten removably the lever 52 on the base 51, as best shown in Figure 8.

In the present invention, a pressing action is applied to the lever 52 to pivot the same in the first direction, where the ratchet wheels 54 and the pivot axle 57 can rotate with the lever 52 to tighten the rope 63. The construction as such is ergonomic, and can be conducted with relative ease and without the discomfort and possible injury generally associated with the prior art described hereinabove.

To loosen the rope 63, the lever 52 is first moved to the initial position of Figure 5. Thereafter, as shown in Figure 9, the operating plates 556 of the second pawl member 55 are operated to enable the pawl piece 554 to move past the radial flanges 516 and into the engaging grooves 517, where the pawl piece 554 is unable to engage the teeth 541 of the ratchet wheels 54, as best shown in Figure 10. At the same time, the larger-curvature sections 528 of the curved peripheries of the lateral walls 520 contact the pawl pieces 564 of the first pawl member 56, which extend laterally through the elongate slots 568 in the lateral plates 510, and push the first pawl member 56 to disengage entirely from the ratchet wheels 54. As such, the rope 63 can be removed from the rope-tightening device 500 at this time.

It is noted that since the operating plates 554, 564 of the pawl members 55, 56 are disposed externally of the lateral plates 510 and the lateral walls 520, manual operation of the pawl members 55, 56 for disengaging the ratchet wheels 54 can be conducted with relative ease.

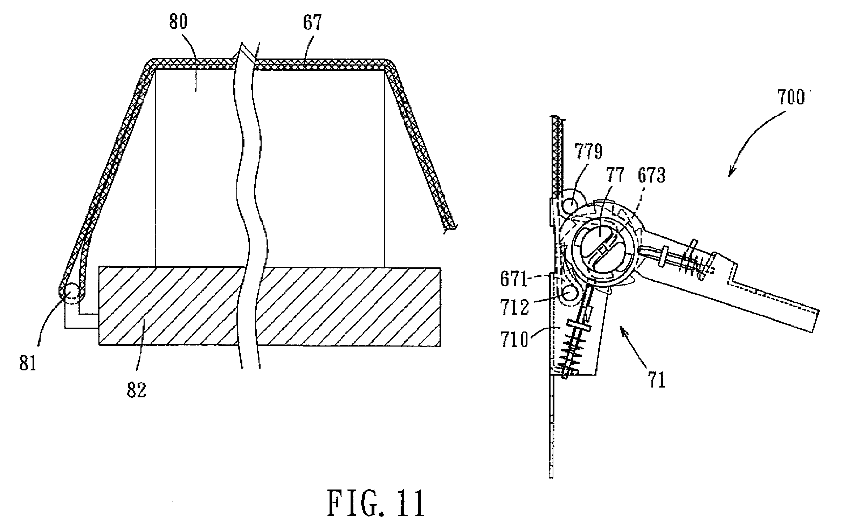

Referring to Figure 11, the second preferred embodiment of a rope-tightening device 700 according to the present invention differs from the first preferred embodiment in that an additional anchor rod 712 is mounted on the base 71 between the lateral plates 710 and is adapted to be secured with one end 671 of the rope 67. In practice, the other end 673 of the rope 67 is extended over an object 80 to be bound, trained on a pivot axle 81 that is mounted on one side of an object carrier 82 opposite to the rope-tightening device 700, extended once again over the object 80, and guided by the rope-guiding rod 779 on the base 71 before being secured to the pivot axle 77. When tightening the rope 67, the two segments of the rope 67 on the object 80 move in opposite directions so as to not only bind the object 80 firmly on the object carrier 82 but also to avoid undesired movement of the object 80 on the object carrier 82.

## Claims

1. A rope-tightening device (500) including
an elongate base (51) having a first pivot portion (511) formed with a first pivot hole (514), and a mounting portion (512) opposite to said first pivot portion (511),
a first pawl member (56) mounted on said base (51),
an elongate lever (52) having a second pivot portion (521) formed with a second pivot hole (524), and an operating portion (522) opposite to said second pivot portion (511),
a second pawl member (55) mounted on said lever (52),
a pivot axle (57) extending through said first and second pivot holes (514, 524) to connect pivotally said lever (52) to said base (51) such that said lever (52) can be pivoted in one of a first direction toward said base (51), and a second direction away from said base (51), said pivot axle (57) being adapted to be connected to one end (631) of a rope (63) that is to be tightened, and
a ratchet wheel (54) mounted on and co-rotatable with said pivot axle (57),
**characterized by** a rope-guiding rod (579) mounted on said base (51), said rope-guiding rod (579) being disposed parallel and adjacent to said pivot axle (57), and being adapted to guide the rope (63) that is connected to said pivot axle (57),
movement of said lever (52) in the first direction enabling said first pawl member (56) to disengage from said ratchet wheel (54) and enabling said second pawl member (55) to engage said ratchet wheel (54) such that said pivot axle (57) rotates with said lever (52) for tightening the rope (63) that is connected to said pivot axle (57) ;
movement of said lever (52) in the second direction enabling said first pawl member (56) to engage said ratchet wheel (54) and enabling said second pawl member (55) to disengage from said ratchet wheel (54) so as to arrest rotation of said pivot axle (57) with said lever (52).

2. The rope-tightening device (500) as claimed in Claim 1, **characterized in that** said base (51) includes a base plate (513) and a pair of lateral plates (510), each of which extends transversely from a respective lateral edge of said base plate (513) and is formed with said first pivot hole (514) and a rod hole (515) disposed on one side of said first pivot hole (514) opposite to said mounting portion (512) and disposed closer to said base plate (513) than said first pivot hole (514), said rope-guiding rod (579) being mounted in said rod holes (515) in said lateral plates (510).

3. The rope-tightening device (500) as claimed in Claim 2, further **characterized in that**:
each of said lateral plates (510) is formed with an elongate slot (568) therethrough,
said first pawl member (56) including a pawl piece (564), a spring (561) for biasing said pawl piece (564) toward said ratchet wheel (54), and a pair of operating plates (566) extending through saidelongate slots (568) in said lateral plates (510).

4. The rope-tightening device (500) as claimed in Claim 1, **characterized in that**:
said lever (52) includes a base wall (523) and a pair of lateral walls (520), each of which extends transversely from a respective lateral edge of said base wall (523) and is formed with said second pivot hole (524) and an elongate slot (558) therethrough,
said second pawl member (55) including a pawl piece (554) disposedbetweensaidlateralwalls (520) , a spring (551) for biasing said pawl piece (554) toward said ratchet wheel (54), and a pair of operating plates (556) extending through said elongate slots (558) in said lateral walls (520).

5. The rope-tightening device (500) as claimed in Claim 1, further **characterized by** a fastener (525) for fastening removably said lever (52) on said base (51).

6. The rope-tightening device (700) as claimed in Claim 1, further **characterized by** an anchor rod (712) mounted on said base (71) and adapted to be secured with the other end (671) of the rope (67).
